## Europäisches Patentamt
## European Patent Office
## Office européen des brevets

(19)

(11) Veröffentlichungsnummer: **0 128 478**
**B1**

(12)
# EUROPÄISCHE PATENTSCHRIFT

(45) Veröffentlichungstag der Patentschrift:
18.03.87

(51) Int. Cl.⁴: **F 16 H 1/445**

(21) Anmeldenummer: **84106258.1**

(22) Anmeldetag: **01.06.84**

(54) **Regelsystem zur Sperrung eines Ausgleichsgetriebes.**

(30) Priorität: **13.06.83 US 503969**

(43) Veröffentlichungstag der Anmeldung:
**19.12.84 Patentblatt 84/51**

(45) Bekanntmachung des Hinweises auf die Patenterteilung:
**18.03.87 Patentblatt 87/12**

(84) Benannte Vertragsstaaten:
**DE FR GB**

(56) Entgegenhaltungen:
**EP-A-0 063 432**
**WO-A-81/02049**
**WO-A-81/02188**
**GB-A-2 067 685**
**US-A-2 874 790**
**US-A-2 894 416**
**US-A-3 400 610**
**US-A-4 218 938**
**US-A-4 263 824**

(73) Patentinhaber: **DEERE & COMPANY, 1 John Deere Road, Moline Illinois 61265 (US)**

(72) Erfinder: **Nighswonger, Lester LeRoy, 2403 Valley High Drive, Cedar Falls Iowa 50612 (US)**

(74) Vertreter: **Gramm, Werner, Prof. Dipl.- Ing., Patentanwälte Gramm + Lins Theodor- Heuss-Strasse 2, D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Regelsystem zur Sperrung eines Ausgleichsgetriebes für ein Fahrzeug mit zumindest einer Radachse, die über ein Ausgleichsgetriebe angetrieben ist, das eine Differentialsperre zu seiner Sperrung und Entsperrung aufweist, wobei das Regelsystem eine erste, fahrerbetätigte Einrichtung aufweist, die an die Differentialsperre angeschlossen ist und das Ausgleichsgetriebe sperren, jedoch nicht entsperren kann, während eine zweite fahrerbetätigte Einrichtung an die Differentialsperre angeschlossen ist und das Ausgleichsgetriebe entsperren nicht jedoch sperren kann.

Eine derartige Ausführungsform zeigt die US-A 3,400,610. Ein kurzzeitig betätigter Tastschalter setzt bei kurzzeitiger Betätigung über die Betätigung eines Relaisschalters einen Stellmotor in Gang und sperrt das Ausgleichsgetriebe. Ein zweiter, fahrgeschwindigkeitsabhängiger Schalter entsperrt das Ausgleichsgetriebe, wenn eine bestimmte Fahrgeschwindigkeit überschritten wird. Wird diese Fahrgeschwindigkeit wieder unterschritten, tritt jedoch selbständig keine Sperrung ein. Hierfür muß vielmehr wieder der kurzzeitige Tastschalter betätigt werden.

Es sind Systeme zur Steuerung der Differentialsperren bekannt bei denen ein solenoidbetätigtes Differentialsperren-Steuerventil über einen einzigen, manuell zu betätigenden Fußbodenschalter gesteuert wird. Bei diesem System muß aber der Fahrer des Fahrzeuges ständig den Bodenschalter niederdrücken, um das Ausgleichsgetriebe gesperrt zu halten. Es ist ferner bekannt, daß eine automatische Entsperrung des Ausgleichsgetriebes unter bestimmten Bedingungen wünschenswert sein kann, z.B. bei der Lenkung des Fahrzeuges oder bei Betätigung der Bremsen zur Erwartung oder Durchführung einer Fahrzeugdrehung.

Dem US-Patent 2,874,790 läßt sich ein Regelsystem zum Entsperren eines Ausgleichsgetriebes in Abhängigkeit von der Lenkung des Fahrzeuges entnehmen. Ferner offenbart ist das Entsperren und Sperren des Ausgleichsgetriebes in Abhängigkeit von der Betätigung eines Zündschalters und in Abhängigkeit der Bremsbetätigung. Hierfür wird eine Differentialsperre durch mehrere in Reihe geschaltete Schalter gesteuert. Ein Nachteil dieses Steuerkreises ist darin zu sehen, daß nach dem Entsperren des Ausgleichsgetriebes aufgrund einer Bremsung oder Lenkungsbetätigung dann eine automatische Neusperrung erfolgt, wenn die genannten Betätigungen beendet sind, und zwar ohne daß der Fahrer eine Entscheidung hinsichtlich der Neusperrung des Ausgleichsgetriebes trifft. Ein weiterer Nachteil liegt darin, daß der Steuerkreis einen manuell zu betätigenden Schalter umfaßt, der geschaltet werden kann, um das Ausgleichsgetriebe sowohl zu entsperren als auch zu sperren.

Ein anderer, im US-Patent 4,347,760 beschriebener Steuerkreis umfaßt (teilweise) einen Flip-Flop sowie einen manuell zu betätigenden Fußbodenschalter. Jedoch führt eine wiederholte Betätigung dieses Fußbodenschalters zum abwechselnden Sperren und Entsperren des Ausgleichsgetriebes. Aufgrund der Doppelfunktion des Fußbodenschalters besteht die Möglichkeit, daß der Fahrer diese manuell zu betätigenden Schalter betätigt mit dem Bestreben, das Ausgleichsgetriebe zu entsperren, wobei dann aber tatsächlich eine Sperrung des Ausgleichsgetriebes erfolgt und umgekehrt.

Weitere abgewandelte Steuerkreise sind im US-Patent 3,732,752 beschrieben. Bei einer hier erläuterten Ausführungsform ist ebenfalls ein derartiger, manuell zu betätigender Schalter mit Doppelfunktion vorgesehen. Eine andere Ausführungsform umfaßt ein Stromstoßrelais und einen kurzzeitigen Kontaktschalter, der nur zur Sperrung des Ausgleichsgetriebes dient. Jedoch weist diese letzte Ausführungsform offensichtlich keine unmittelbar manuell gesteuerte Einrichtung zum Entsperren des Ausgleichsgetriebes auf noch ist eine Einrichtung zum Lösen des Relais nach dessen Anziehen vorgesehen; dadurch wird der kurzzeitige Kontaktschalter nach seiner ersten Betätigung nutzlos und führt im elektrischen System des Fahrzeugs zu einer permanenten Energieentladung.

Der Erfindung liegt die Aufgabe zugrunde, das eingangs erlauterte Regelsystem unter Vermeidung der vorstehend genannten Nachteile flexibler zu gestalten andererseits aber Fehlbedienungen zu vermeiden.

Diese Aufgabe wird gemäß der Erfindung durch folgende-Merkmale gelöst:

a) ein Stromstoßrelais ist an die erste und zweite fahrerbetätigte Einrichtung angeschlossen;

b) das Stromstoßrelais weist einen Halteanschluß sowie einen ersten und zweiten Schalteranschluß auf, von denen einer an den Eingang der Differentialsperre angeschlossen ist;

c) ein Schalter verbindet oder trennt den ersten und zweiten Schalteranschluß miteinander bzw. voneinander;

d) eine Schaltersteuerung öffnet und schließt den genannten Schalter in Abhängigkeit von auf den Halteanschluß gegebenen Signalen;

e) die erste fahrerbetätigte Einrichtung weist einen normalerweise geöffneten kurzzeitigen Kontaktschalter auf, der mit seiner einen Seite an dem Halteanschluß und dem Eingang der Differentialsperre und mit seiner anderen Seite an eine Spannungsquelle angeschlossen ist;

f) die zweite fahrerbetätigte Einrichtung weist zumindest einen normalerweise geschlossenen Schalter auf, der zwischen die Spannungsquelle und das Stromstoßrelais geschaltet ist;

g) eine Öffnungseinrichtung öffnet den normalerweise geschlossenen Schalter in Abhängigkeit von einer vorgegebenen Fahrzeugfunktion;

h) ein Steuerkreis erzeugt das Sperrsignal, wenn die Spannungsquelle mit dem Eingang der Differentialsperre verbunden wird und erzeugt das Entsperrsignal, wenn die Spannungsquelle vom Eingang der Differentialsperre getrennt wird.

Meist werden zwei Ausgleichsgetriebe vorgesehen sein, die in die Vorder- und Hinterachse insbesondere eines landwirtschaftlichen Fahrzeuges eingebaut sind. Die Ausgleichsgetriebe weisen hydraulisch betätigte Differentialsperren auf die ihrerseits durch ein solenoidbetätigtes Ventil gesteuert werden. Diese Solenoidventile werden von einem Schaltkreis gesteuert, der ein Stromstoßrelais, einen normalerweise geöffneten, manuell zu bedienenden Schalter der lediglich zum Schließen des Relais und zur Sperrung des Ausgleichsgetriebes dient, sowie zwei in Reihe geschaltete, normalerweise geschlossene Schalter aufweist die nur zum Entsperren des Ausgleichsgetriebes in Abhängigkeit von der Fahrzeuglenkung oder einer Bremsbetätigung dienen.

Weitere Merkmale der Erfindung sind Gegenstand der Unteransprüche und werden anhand eines Ausführungsbeispiels näher erläutert.

In der Zeichnung ist eine als Beispiel dienende Ausführungsform der Erfindung in einem schematischen Diagramm dargestellt.

Das Getriebe eines vierradangetriebenen Fahrzeuges umfaßt in die Vorder- und Hinterachse eingebaute Ausgleichsgetriebe 10, 12 mit üblichen, hydraulisch betätigten Differentialsperren 14, 15, wie sie z. B. im US-Patent 3,292,720 beschrieben sind. Der Flüssigkeitsaustausch zwischen den Differentialsperren 14 und 16 und einer Pumpe 18 und eines Reservoirs 20 wird von einem üblichen solenoidbetätigten Zwei-Wege-Ventil (Zwei-Positions-Ventil) 22 mit Solenoid 24 gesteuert.

Ein Steuerkreis 30 weist eine Spannungsquelle oder Batterie 32, zwei in Reihe geschaltete und normalerweise geschlossene Schalter 34, 36, einen normalerweise geöffneten, kurzzeitigen Kontaktschalter 38 sowie ein übliches Stromstoßrelais 40 auf. Die Schalter 34, 36 sind zwischen die Batterie 32 und einen ersten Anschluß 42 des Relais 40 geschaltet. Der zweite Relaisanschluß 44 ist an das Solenoid des Ventils 22, an die eine Seite eines normalerweise geöffneten Schalters 38 sowie an den dritten oder Spulenanschluß 46 des Relais 40 angeschlossen. Ein Schalter 48 überbrückt die Anschlüsse 42 und 44 und wird von einer Relaisspule 50 betätigt.

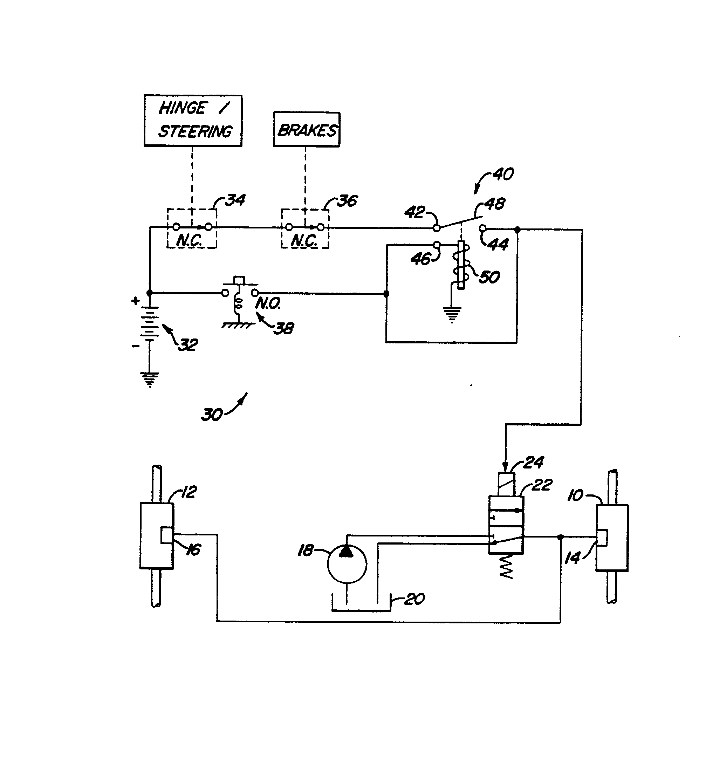

Handelt es sich bei dem nicht dargestellten Fahrzeug um eine Gelenkbauart, dann steht der Schalter 34 vorzugsweise mit dem nicht dargestellten Fahrzeuggelenk so in Verbindung, daß der Schalter 34 immer dann öffnet, wenn das Fahrzeug um einen bestimmten Betrag, z. B. um 10° knickt. Die Ausgestaltung eines derartigen winkelabhängigen Schalters ist für jeden Durchschnittsfachmann geläufig. Beispielsweise kann die in Figur 3 des US-Patentes 2,874,790 dargestellte Schaltereinrichtung in Verbindung mit dem Gelenk eines Fahrzeuges verwendet werden.

Handelt es sich um ein starres Fahrzeug, kann der Schalter 34 vorzugsweise von dem Fahrzeuglenkungssystem beaufschlagt werden, so daß der Schalter 34 immer dann öffnet, wenn eine vorbestimmte Lenkungsbetätigung durchgeführt wird, z. B. eine zumindest 10°-Drehung des Lenkrades. Dies läßt sich erreichen durch einen sich mit dem Lenkrad drehenden Nocken und einem an dem Nocken anliegenden und den Schalter 34 steuernden Steuerteil. Alternativ kann auch ein lenkungsbetätigter Schalter verwendet werden, wie er im US-Patent 2,874,790 beschrieben ist.

Der Schalter 36 steht vorzugsweise in Wirkverbindung mit dem Bremssystem des Fahrzeugs, so daß dieser Schalter 36 immer dann öffnet, wenn die Fahrzeugbremsen betätigt werden. Ein solcher bremsabhängiger Schalter ist allgemein bekannt und außerdem im US-Patent 2,874,740 beschrieben. Der Schalter 38 kann vorzugsweise im Fahrerhaus angeordnet sein, um für den Fahrzeugführer leicht zugänglich zu sein.

Das Regelsystem arbeitet wie folgt: Geht man davon aus, daß das Relais 40 anfangs geöffnet ist, dann muß die Bedienungsperson den Schalter 38 zeitweise schließen, um die Differentialsperren 14, 16 der Ausgleichsgetriebe 10, 12 zu sperren. Hierdurch werden gleichzeitig das Solenoid des Ventils 22 erregt, die Differentialsperren 14, 16 beaufschlagt und die Spule 50 des Relais 40 erregt, die den Schalter 48 schließt. Die Spule 50 wird nunmehr außerdem über die Schalter 34, 36 und 48 erregt, so daß beim Loslassen und Öffnen des Schalters 38 die Spule 50 erregt bleibt, also weiterhin den Schalter 48 in seiner Schließstellung hält und die Differentialsperren 14, 16 beaufschlagt bleiben. Zu diesem Zeitpunkt bleibt eine erneute und auch weitere Betätigungen des Schalters 38 ohne Effekt, da das Solenoid 24 unabhängig vom Schalter 38 über die Schalter 34, 36 und 48 erregt bleibt.

Öffnet nun eine Knickbewegung des Fahrzeuges oder eine Lenkungsbetätigung oder aber eine Bremsbetätigung einen der Schalter 34 oder 36, wird das Solenoid 24 stromlos. Dadurch wird auch die Spule 50 stromlos, wodurch der Schalter 48 öffnet und offen bleibt, so daß ein Wiederschließen oder weitere Betätigungen der Schalter 34 und 36 nicht zu einer erneuten Beaufschlagung der Differentialsperren 14 und 16 führen können. Demnach kann der Schalter 38 die Differentialsperren 14 und 16 nur sperren, nicht aber entsperren, während die Schalter 34 und 36 die Differentialsperren 14 und 16 nur entsperren, jedoch nicht sperren bzw. erneut sperren können. Nachdem einer der Schalter 34 oder 36 geöffnet hat, lassen sich die Differentialsperren 14 und 16 nur dadurch wieder beaufschlagen, daß die Bedienungsperson willentlich den Schalter 38 schließt.

## Patentansprüche

1. Regelsystem zur Sperrung eines Ausgleichsgetriebes (10, 12) für ein Fahrzeug mit zumindest einer Radachse die über ein Ausgleichsgetriebe (10, 12) angetrieben ist, das eine Differentialsperre (14, 16) zu seiner Sperrung und Entsperrung aufweist wobei das Regelsystem eine erste, fahrerbetätigte Einrichtung (38) aufweist, die an die Differentialsperre (14, 16) angeschlossen ist und das Ausgleichsgetriebe (10, 12) sperren, jedoch nicht entsperren kann, während eine zweite fahrerbetätigte Einrichtung (34, 36) an die Differentialsperre (14, 16) angeschlossen ist und das Ausgleichsgetriebe (10, 12) entsperren, nicht jedoch sperren kann, gekennzeichnet durch folgende Merkmale:

a) ein Stromstoßrelais (40) ist an die erste und zweite fahrerbetätigte Einrichtung (38, 34, 36) angeschlossen;

b) das Stromstoßrelais (40) weist einen Halteanschluß (46) sowie einen ersten und zweiten Schalteranschluß (42, 44) auf von denen einer (44) an den Eingang der Differentialsperre (14, 16) angeschlossen ist;

c) ein Schalter (48) verbindet oder trennt den ersten und zweiten Schalteranschluß (42, 44) miteinander bzw. voneinander;

d) eine Schaltersteuerung (50) öffnet und schließt den genannten Schalter (48) in Abhängigkeit von auf den Halteanschluß (46) gegebenen Signalen;

e) die erste fahrerbetätigte Einrichtung weist einen normalerweise geöffneten kurzzeitigen Kontaktschalter (38) auf der mit seiner einen Seite an dem Halteanschluß (46) und dem Eingang der Differentialsperre (14, 16) und mit seiner anderen Seite an eine Spannungsquelle (32) angeschlossen ist;

f) die zweite fahrerbetätigte Einrichtung weist zumindest einen normalerweise geschlossenen Schalter (34, 36) auf der zwischen die Spannungsquelle (32) und das Stromstoßrelais (40) geschaltet ist;

g) eine Öffnungseinrichtung öffnet den normalerweise geschlossenen Schalter (34, 36) in Abhängigkeit von einer vorgegebenen Fahrzeugfunktion;

h) ein Steuerkreis (30) erzeugt das Sperrsignal wenn die Spannungsquelle (32) mit dem Eingang der Differentialsperre (14, 16) verbunden wird und erzeugt das Entsperrsignal wenn die Spannungsquelle (32) vom Eingang der Differentialsperre (14, 16) getrennt wird.

2. Regelsystem nach Anspruch 1, dadurch gekennzeichnet, daß die Differentialsperre (14, 16) eine hydraulisch betätigte Sperreinrichtung aufweist, die durch ein solenoidbetätigtes Hydraulikventil (22, 24) gesteuert wird.

3. Regelsystem nach Anspruch 2 dadurch gekennzeichnet daß der Kontaktschalter (38) mit seiner einen Seite sowohl an das Stromstoßrelais (40) als auch an das solenoidgesteuerte Ventil (22, 24) angeschlossen ist.

4. Regelsystem nach Anspruch 1, 2 oder 3, dadurch gekennzeichnet, daß die Öffnungseinrichtung einen ersten, normalerweise geschlossenen Schalter (34) in Abhängigkeit von einer vorgegebenen Fahrzeuglenkungsbetätigung öffnet.

5. Regelsystem nach einem der vorhergehenden Ansprüche, dadurch gekennzeichnet, daß die Öffnungseinrichtung einen zweiten normalerweise geschlossenen Schalter (36) in Abhängigkeit von einer Betätigung der Fahrzeugbremse öffnet.

6. Regelsystem nach Anspruch 4 und 5, dadurch gekennzeichnet daß der erste, auf eine Fahrzeuglenkungsbetätigung ansprechende Schalter (34) sowie der zweite, auf eine Fahrzeugbremsbetätigung ansprechende Schalter (36) in Reihe zwischen die Spannungsquelle (32) und den anderen Schalteranschluß (42) des Relais (40) geschaltet sind.

## Claims

1.) A control system for locking a differential (10, 12) for a vehicle having at least one axle shaft driven through a differential (10, 12) which includes locking means (14, 16) for locking and unlocking the differential, the control system comprising a first operator-controlled device (38) coupled to the locking means (14, 16) and operable to lock but not to unlock the differential (10, 12), whereas a second operator-controlled device (34, 36) is coupled to the locking means (14, 16) and operable to unlock but not to lock the differential (10, 12) characterized by the following features:

a) a latching relay (40) is coupled to the first and second operator-controlled device (38, 34, 36);

b) the latching relay (40) having a latch terminal (46) as well as first and second switch coupled terminals (42, 44), one (44) of which is connected to the input of the locking means (14, 16);

c) switch means (48) for connecting or disconnecting the first and second terminals (42, 44) with and from each other;

d) switch control means (50) for opening and closing the switch means (48) in response to signals applied to the latch terminal (46);

e) the first operator-controlled device comprises a normally opened momentary contact switch (38) coupled on its one side to the latch terminal (46) and to the input of the locking means (14, 16) and on its other side to a potential source (32);

f) the second operator-controlled device comprises at least a normally closed switch (34, 36) coupled between the potential source (32) and the latching relay (40);

g) means for opening the normally closed switch (34, 36) in response to a predetermined vehicle function;

h) a control circuit (30) generating the locking signal when the potential source (32) is connected with the input of the locking means (14, 16) and generating the unlocking signal when the potential source (32) is disconnected from the input of the locking means (14, 16).

2. Control system according to claim 1, characterized in that the locking means (14, 16) comprise a hydraulically operated differential lock mechanism controlled by a solenoid-operated hydraulic valve (22, 24).

3. Control system according to claim 2, characterized in that the contact switch (38) is coupled on its one side to the latching relay (40) as well as to the solenoid-controlled valve (22, 24).

4. Control system according to claim 1, 2 or 3 characterized in that said means for opening opens a first normally closed switch (34) in response to a predetermined vehicle steering operation.

5. Control system according to one of the preceding claims characterized in that said means for opening opens a second normally closed switch (36) in response to a vehicle brake application.

6. Control system according to claims 4 and 5 characterized in that the first switch (34) being responsive to a vehicle steering operation as well as the second switch (36) being responsive to a vehicle brake application are series-connected and coupled between the potential source (32) and the other switch-coupled terminal (42) of the relay (40).

**Revendications**

1.- Système de réglage pour le blocage d'un différentiel (10, 12) pour un véhicule équipé d'au moins un essieu, qui est entraîné par l'intermédiaire d'un différentiel (10, 12), qui comporte un dispositif de blocage de différentiel (14, 16) pour son blocage et son déblocage, le système de réglage comportant un premier dispositif (38) actionné par le conducteur, qui est relié au dispositif de blocage de différentiel (14, 16) et peut bloquer le différentiel (10, 12), mais pas le débloquer, tandis qu'un second dispositif (34, 36) actionné par le conducteur et relié au dispositif de blocage de différentiel (14, 16) et peut débloquer le différentiel (10, 12), mais pas le bloquer, caractérisé par les caractéristiques suivantes:

a) un relais à impulsions de courant (40) est relié aux premier et second dispositifs actionnés par le conducteur (38, 34, 36);

b) le relais à impulsions de courant (40) comporte une connexion ou borne de maintien (46), ainsi qu'une première connexion et une seconde connexion (ou bornes) de contacteur (42, 44) dont l'une (44) est reliée à l'entrée du dispositif de blocage de différentiel (14, 16);

c) un contacteur (48) relie ou sépare mutuellement la première connexion de contacteur et la seconde (42, 44);

d) un ensemble de commande de contacteur (50) ouvre et ferme ledit contacteur (48) en fonction de signaux appliqués à la connexion de maintien (46);

e) le premier dispositif actionné par le conducteur comporte un contacteur (ou commutateur) (38) normalement ouvert à fermeture momentanée, qui est relié, par l'une des bornes, à la connexion de maintien (46) et à l'entrée du dispositif de blocage de différentiel (14, 16) et, par son autre borne, à une source de tension (32);

f) le second dispositif actionné par le conducteur comporte au moins un commutateur (34, 36) normalement fermé, monté entre la source de tension (32) et le relais à impulsions de courant (40);

g) un dispositif d'ouverture ouvre le commutateur normalement fermé (34, 36) selon une fonction du véhicule prédéterminée;

h) un circuit de commande (30) engendre le signal de blocage, lorsque la source de tension (32) est mise en liaison avec l'entrée du dispositif de blocage de différentiel (14, 16) et engendre le signal de déblocage, lorsque la source de tension (32) est séparée de l'entrée du dispositif de blocage de différentiel (14, 16).

2.- Système de réglage selon la revendication 1, caractérisé en ce que le dispositif de blocage de differentiel (14, 16) comporte un dispositif de blocage actionné hydrauliquement, qui est commandé par une soupape hydraulique (22, 24) actionnée par solénoïde.

3.- Système de réglage selon la revendication 2, caractérisé en ce que le contacteur (38) est relié, par l'une de ses bornes, à la fois au relais à impulsions de courant (40) et à la soupape actionnée par solénoïde (22, 24).

4.- Système de réglage selon la revendication 1, 2 ou 3, caractérisé en ce que le dispositif d'ouverture ouvre un premier commutateur (34) normalement fermé en fonction d'un actionnement prédéterminé du système de direction du véhicule.

5.- Système de réglage selon l'une des revendications précédentes, caractérisé en ce que le dispositif d'ouverture ouvre un second commutateur (36) normalement fermé en fonction d'un actionnement du frein du véhicule.

6.- Système de réglage selon les revendications 4 et 5, caractérisé en ce que le premier commutateur (34) réagissant à l'actionnement du système de direction du véhicule, ainsi que le second commutateur (36) réagissant à un actionnement du frein du véhicule sont montés en série entre la source de tension (32) et l'autre connexion de contacteur (42) du relais (40).